# EUROPEAN PATENT APPLICATION

(11) **EP 4 704 212 A1**
(43) Date of publication of application: **04.03.2026**
(21) Application number: 25162252.8
(22) Date of filing: 07.03.2025
(51) Int. Cl.: H01M 10/0585, H01M 50/533, H01M 50/54, H01M 50/528

(54) **ELECTRODE ASSEMBLY, SECONDARY BATTERY AND BATTERY PACK**

(30) Priority: 28.08.2024 KR 20240116107
(71) Applicant: Samsung SDI Co., Ltd., Gyeonggi-do 17084 (KR)
(72) Inventor: ROH, HEYOUNG CHEOUL, Suwon-si, Gyeonggi-do 16678 (KR); YONG, JUN SUN, Suwon-si, Gyeonggi-do 16678 (KR); LEE, JUN HYUNG, Suwon-si, Gyeonggi-do 16678 (KR); BAE, KWANG SOO, Suwon-si, Gyeonggi-do 16678 (KR); KIM, JI HWAN, Suwon-si, Gyeonggi-do 16678 (KR); BAE, CHAE EUN, Suwon-si, Gyeonggi-do 16678 (KR); LEE, JUNG WOO, Suwon-si, Gyeonggi-do 16678 (KR); KIM, MI SOL, Suwon-si, Gyeonggi-do 16678 (KR); PARK, SE EUN, Suwon-si, Gyeonggi-do 16678 (KR); YOON, JI HWAN, Suwon-si, Gyeonggi-do 16678 (KR)
(74) Representative: Gulde & Partner

(57) **Abstract**

An electrode assembly, a secondary battery, and a battery pack are disclosed. An electrode assembly includes a first electrode, a second electrode facing the first electrode along a first direction, a negative electrode tab extending from the first electrode and bent in the first direction or in a direction opposite to the first direction, and a positive electrode tab extending from the second electrode and bent in the first direction or in the direction opposite to the first direction.

## Description

### BACKGROUND

### 1. Field

Aspects of embodiments of the present disclosure relate to an electrode assembly, a secondary battery, and a battery pack.

### 2. Description of the Related Art

In general, recently, the demand for secondary batteries with high energy density and high capacity is rapidly increasing with the rapid supply of electronic devices using batteries, such as mobile phones, notebook computers, electric vehicles, and the like. Accordingly, research and development for improving the performance of lithium secondary batteries is being actively conducted.

A lithium secondary battery is a battery including a positive electrode and a negative electrode including active materials capable of intercalating and deintercalating lithium ions, and an electrolyte, and produces electrical energy due to oxidation and reduction reactions when lithium ions are intercalated/deintercalated into/from the positive electrode and the negative electrode.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, an electrode assembly, a secondary battery, and a battery pack capable of equalizing deterioration which locally occurs due to internal heat generation are provided.

The above and other aspects and features of the present disclosure will be described in or will be apparent from the following description of some embodiments of the present disclosure.

According to one or more embodiments of the present disclosure, an electrode assembly includes a first electrode, a second electrode facing the first electrode along a first direction, a negative electrode tab extending from the first electrode and bent in the first direction or in a direction opposite to the first direction, and a positive electrode tab extending from the second electrode and bent in the first direction or in the direction opposite to the first direction.

The negative electrode tab and the positive electrode tab may be bent in opposite directions.

The negative electrode tab may extend from the first electrode along a second direction intersecting the first direction.

The negative electrode tab may include a first negative electrode tab and a second negative electrode tab spaced apart from the first negative electrode tab.

The first negative electrode tab and the second negative electrode tab may be spaced apart from each other along a third direction intersecting the first direction and the second direction.

The first negative electrode tab may be bent in the first direction or in the direction opposite to the first direction, and the second negative electrode tab may be bent in the first direction or in the direction opposite to the first direction.

The first negative electrode tab and the second negative electrode tab may be bent in opposite directions.

The positive electrode tab may extend from the second electrode along the second direction.

The positive electrode tab may include a first positive electrode tab and a second positive electrode tab spaced apart from the first positive electrode tab.

The first positive electrode tab and the second positive electrode tab may be spaced apart from each other along a third direction intersecting the first direction and the second direction.

The first positive electrode tab may be bent in the first direction or in the direction opposite to the first direction, and the second positive electrode tab may be bent in the first direction or in the direction opposite to the first direction.

The first positive electrode tab and the second positive electrode tab may be bent in opposite directions.

The second negative electrode tab may be located between the first negative electrode tab and the first positive electrode tab.

The first positive electrode tab may be located between the second negative electrode tab and the second positive electrode tab.

The second negative electrode tab and the first positive electrode tab may be located between the first negative electrode tab and the second positive electrode tab.

According to one or more embodiments of the present disclosure, a secondary battery includes a case, an electrode assembly accommodated in the case and including a negative electrode tab and a positive electrode tab that are bent in opposite directions, a cap assembly facing the electrode assembly and including a first terminal and a second terminal, a first connection member between the electrode assembly and the cap assembly and connected to the first terminal and the negative electrode tab, and a second connection member between the electrode assembly and the cap assembly and connected to the second terminal and the positive electrode tab.

The negative electrode tab may include a first negative electrode tab and a second negative electrode tab extending from the electrode assembly and bent in opposite directions.

The positive electrode tab may include a first positive electrode tab and a second positive electrode tab extending from the electrode assembly and bent in opposite directions.

The first connection member may include a first current collector connected to the first terminal, a first negative electrode tab plate connected to the first negative electrode tab, and a second negative electrode tab plate connected to the second negative electrode tab.

The second connection member may include a second current collector connected to the second terminal, a first positive electrode tab plate connected to the first positive electrode tab, and a second positive electrode tab plate connected to the second positive electrode tab.

According to one or more embodiments of the present disclosure, a battery pack includes a housing and a plurality of secondary batteries accommodated in the housing.

Each of the secondary batteries may include a case, an electrode assembly accommodated in the case and including a negative electrode tab and a positive electrode tab that are bent in opposite directions, a cap assembly facing the electrode assembly and including a first terminal and a second terminal, a first connection member between the electrode assembly and the cap assembly and connected to the first terminal and the negative electrode tab, and a second connection member between the electrode assembly and the cap assembly and connected to the second terminal and the positive electrode tab.

### BRIEF DESCRIPTION OF THE DRAWINGS

The drawings provided with this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating a configuration of a battery pack according to an embodiment of the present disclosure;
FIG. 2 is a perspective view schematically illustrating a configuration of a secondary battery according to an embodiment of the present disclosure;
FIG. 3 is an exploded perspective view schematically illustrating the configuration of the secondary battery according to an embodiment of the present disclosure;
FIG. 4 is a view schematically illustrating a configuration of an electrode assembly according to an embodiment of the present disclosure;
FIG. 5 is a plan view schematically illustrating the configuration of the secondary battery according to an embodiment of the present disclosure;
FIG. 6 is a partial enlarged plan view schematically illustrating the configuration of the secondary battery according to an embodiment of the present disclosure;
FIG. 7 is a cross-sectional view schematically illustrating the configuration of the secondary battery according to an embodiment of the present disclosure;
FIG. 8 is a partial enlarged plan view schematically illustrating the configuration of the secondary battery according to an embodiment of the present disclosure; and
FIG. 9 is a cross-sectional view schematically illustrating the configuration of the secondary battery according to an embodiment of the present disclosure.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing some embodiments of the present disclosure and are not intended to limit the present disclosure.

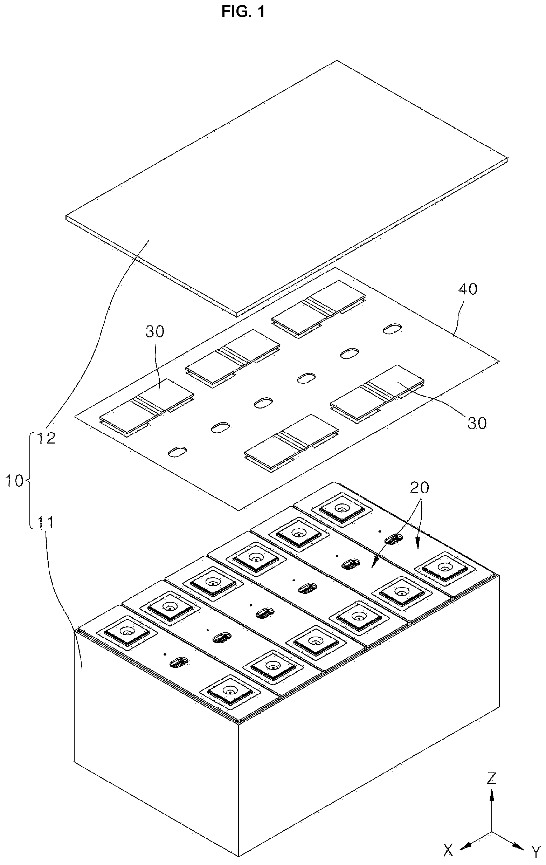

FIG. 1 is a perspective view schematically illustrating a configuration of a battery pack according to an embodiment of the present disclosure.

Referring to FIG. 1, the battery pack according to an embodiment may include a housing 10, a secondary battery 20, and a bus bar 30.

The housing 10 may generally form an exterior of the battery pack and provide a space where the secondary battery 20 may be accommodated. The housing 10 may include a housing body 11 and a cover 12.

The housing body 11 may be formed to have a box shape in which the inside is empty and a side is open. However, a cross-sectional shape of the housing body 11 is not limited to the quadrangular shape shown in FIG. 1, and may have any of various shapes, such as a polygonal shape, a circular shape, an oval shape, and the like.

The cover 12 may be coupled to the housing body 11 and close the inner space of the housing body 11. For example, the cover 12 may be formed to have a generally plate shape and may be disposed to face the open side of the housing body 11.

The cover 12 may be fixed to the housing body 11 by any of various types of coupling methods, such as bolting, welding, fitting, latching and the like.

The secondary battery 20 may function as a unit structure which stores and supplies power in the battery pack.

Herein, the secondary battery 20 according to an embodiment of the present disclosure will be described.

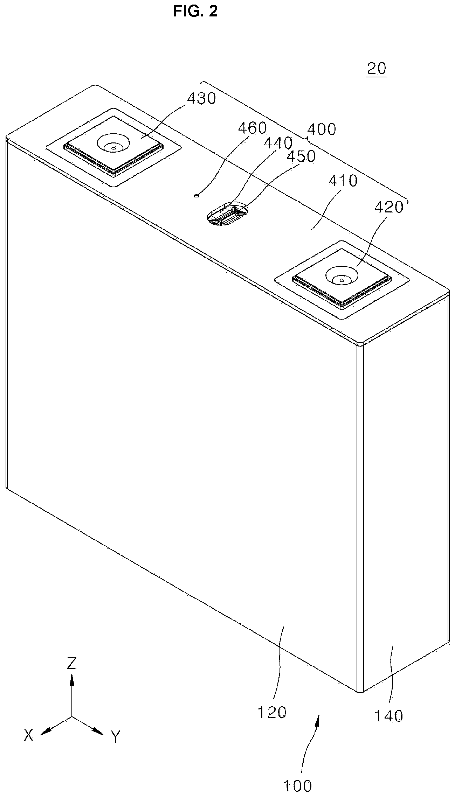

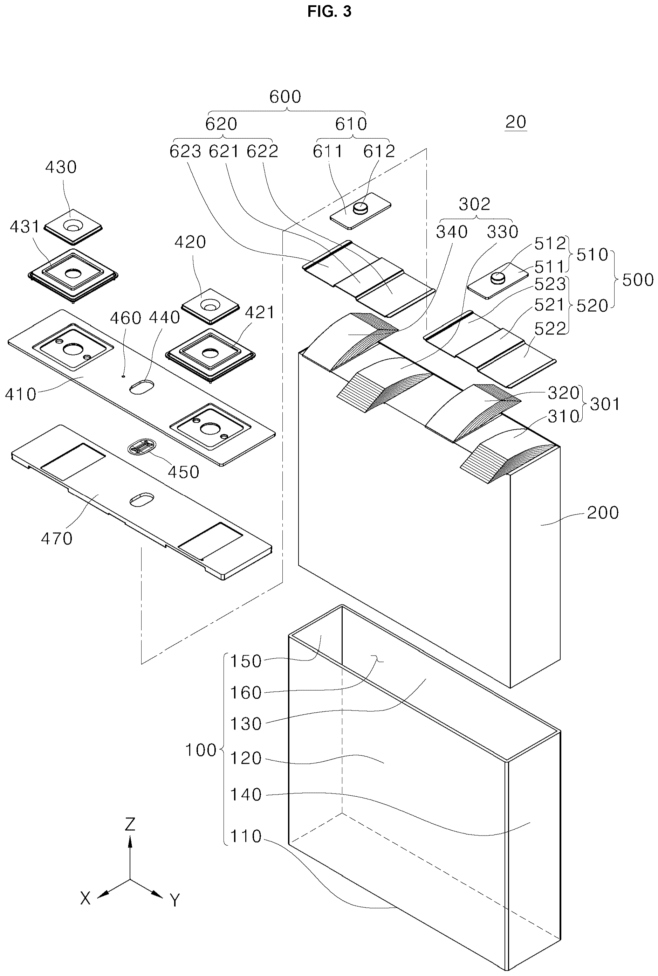

FIG. 2 is a perspective view schematically illustrating a configuration of the secondary battery according to an embodiment of the present disclosure; and FIG. 3 is an exploded perspective view schematically illustrating the configuration of the secondary battery according to an embodiment of the present disclosure.

Herein, a non-limiting example in which the secondary battery 20 is a prismatic battery as a lithium ion secondary battery will be described. However, the present disclosure is not limited thereto, and the secondary battery 20 may be a lithium polymer battery or a cylindrical battery, for example.

Referring to FIGS. 2 and 3, the secondary battery 20 according to an embodiment may include a case 100, an electrode assembly 200, a negative electrode tab 301, a positive electrode tab 302, a cap assembly 400, a first connection member 500, and a second connection member 600.

The case 100 may generally form an exterior of the secondary battery 20 and accommodate the electrode assembly 200. The case 100 may include a bottom portion 110, a front surface portion 120, a rear surface portion 130, a first side surface portion 140, and a second side surface portion 150.

The bottom portion 110 may form the exterior of a lower side (based on FIG. 3) of the case 100. The bottom portion 110 according to an embodiment may have a rectangular plate shape, but is not limited thereto. The bottom portion 110 may be seated on a bottom surface of the housing body 11.

The front surface portion 120, the rear surface portion 130, the first side surface portion 140, and the second side surface portion 150 may form the exterior of the periphery of the case 100.

The front surface portion 120, the rear surface portion 130, the first side surface portion 140, and the second side surface portion 150 may have plate shapes extending upward from edges of the bottom portion 110 (based on FIG. 3).

The front surface portion 120, the rear surface portion 130, the first side surface portion 140, and the second side surface portion 150 may be disposed to surround a space above the bottom portion 110. In an embodiment, the front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other along a longitudinal direction of the housing 10. In an embodiment, the front surface portion 120 and the rear surface portion 130 may be disposed parallel to each other. Areas of the front surface portion 120 and the rear surface portion 130 may be the same.

The first side surface portion 140 and the second side surface portion 150 may be disposed to face each other along a width direction of the housing 10. In an embodiment, the first side surface portion 140 and the second side surface portion 150 may be disposed parallel to each other.

Areas of the first side surface portion 140 and the second side surface portion 150 may be the same. The areas of the first side surface portion 140 and the second side surface portion 150 may be smaller than the areas of the front surface portion 120 and the rear surface portion 130.

The case 100 may further include an opening 160. The opening 160 may define a space surrounded by upper end portions of the front surface portion 120, the rear surface portion 130, the first side surface portion 140, and the second side surface portion 150. The opening 160 may interconnect the space inside and outside the case 100.

Accordingly, the case 100 according to an embodiment may have a rectangular parallelepiped shape with an open upper side.

A first direction to be described below may refer to a direction parallel to an X-axis and a direction from the rear surface portion 130 toward the front surface portion 120 based on FIG. 3. A second direction may refer to a direction parallel to a Z-axis and a direction from the bottom portion 110 toward the opening 160 based on FIG. 3. A third direction may refer to a direction parallel to a Y-axis and a direction from the second side surface portion 150 toward the first side surface portion 140 based on FIG. 3.

The electrode assembly 200 may function as a unit structure which performs charging and discharging operations of power in the secondary battery 20. The electrode assembly 200 may be accommodated in the case 100.

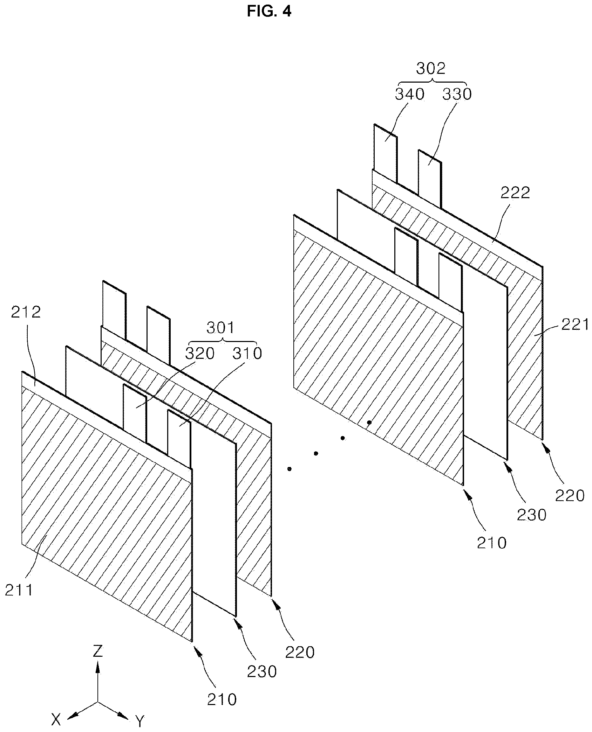

FIG. 4 is a view schematically illustrating a configuration of the electrode assembly according to an embodiment of the present disclosure.

Referring to FIGS. 2 to 4, the electrode assembly 200 according to an embodiment may include a first electrode 210, a second electrode 220, and a separator 230 disposed between the first electrode 210 and the second electrode 220. A plurality of first electrodes 210, separators 230, and second electrodes 220 may be provided.

Herein, the electrode assembly 200 will be described as having a stacked form in which a plurality of first electrodes 210, separators 230, and second electrodes 220 are sequentially stacked along the first direction. However, the form of the electrode assembly 200 is not limited thereto, and may be formed to have a form wound around a winding axis in a clockwise direction or counterclockwise direction in a state in which the first electrodes 210, the separators 230, and the second electrodes 220 are stacked.

The first electrode 210 may function as either a positive electrode or negative electrode of the electrode assembly 200. Herein, the first electrode 210 will be described as an example of the negative electrode of the electrode assembly 200. However, the first electrode 210 is not limited thereto, and may function as the positive electrode of the electrode assembly 200.

The first electrode 210 according to an embodiment may be formed to have a foil shape including a metal material, such as copper, a copper alloy, nickel, or a nickel alloy.

However, a type, size, shape, or the like of the first electrode 210 is not particularly limited as long it has conductivity and does not cause a chemical change in the secondary battery 20.

A cross-sectional shape of the first electrode 210 may be designed to have any of various shapes in addition to the rectangular shape shown in FIG. 4.

A plurality of first electrodes 210 may be provided. The plurality of first electrodes 210 may be arranged between the front surface portion 120 and the rear surface portion 130 of the case 100 along the first direction. The number of first electrodes 210 may be varied depending on a charging capacity and the like of the secondary battery 20.

A first active material layer 211 may be applied on at least a portion of the first electrode 210. The first active material layer 211 may be applied on both, or opposite, surfaces of the first electrode 210, or may be applied on only one surface of the first electrode 210.

The first electrode 210 functions as the negative electrode in the example embodiment, and the first active material layer 211 may include a negative electrode active material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof.

An example of crystalline carbon may be graphite, such as amorphous, plate-shaped, flaky, spherical, or fibrous natural graphite or artificial graphite, and an example of amorphous carbon may be soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

An Si-based negative electrode active material or Sn-based negative electrode active material may be used as the material capable of doping and dedoping lithium. The Si-based negative electrode active material may be silicon, a silicon-carbon composite, SiOₓ (0 < x < 2), an Si-Q alloy (the Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. The silicon-carbon composite may be in the form of silicon particles of which surfaces are coated with amorphous carbon. For example, the silicon-carbon composite may include a secondary particle (a core) in which silicon primary particles are assembled, and an amorphous carbon coating layer (a shell) located on the surface of the secondary particle.

The amorphous carbon may also be located between the silicon primary particles, and, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with a carbon-based negative electrode active material.

The first active material layer 211 may further include a negative electrode conductive material and a negative electrode binder.

The negative electrode conductive material is used to impart conductivity to the first active material layer 211, and any suitable material which does not cause a chemical change and is electronically conductive may be used.

Examples of the negative electrode conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer, such as a polyphenylene derivative or the like, or a mixture thereof.

The negative electrode binder attaches the particles constituting the negative electrode active material to each other well, and also attaches the negative electrode active material to the first electrode 210 well.

Example of the negative electrode binder include a non-aqueous binder, an aqueous binder, a dry binder, or a combination thereof.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, a cellulose-based compound capable of imparting viscosity may be further included. As the cellulose-based compound, one or more types of carboxymethyl cellulose, hydroxypropylmethyl cellulose, methyl cellulose, or alkali metal salts thereof may be used in combination. Na, K, or Li may be used as the alkali metal.

The dry binder is a polymer material capable of fiberization and may be, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 on which the first active material layer 211 is not applied.

The first uncoated portion 212 according to an embodiment may be disposed at an upper end region of the first electrode 210 disposed to face the opening 160 in the case 100. However, a form of the first uncoated portion 212 is not limited thereto, and, in an embodiment, may be formed over an entire edge region of the first electrode 210.

The second electrode 220 may function as the other of the positive electrode and the negative electrode of the electrode assembly 200. Herein, the second electrode 220 will be described as an example of the positive electrode of the electrode assembly 200. However, the second electrode 220 is not limited thereto, and may function as the negative electrode of the electrode assembly 200.

A plurality of second electrodes 220 may be provided. The plurality of second electrodes 220 may be arranged between the front surface portion 120 and the rear surface portion 130 of the case 100 along the first direction.

The first electrodes 210 and the second electrodes 220 may be alternately disposed along the first direction. The second electrode 220 may be spaced apart from the first electrode 210 by an interval (e.g., a set interval) along the first direction.

The second electrode 220 according to an embodiment may be formed to have a foil shape including a metal material, such as aluminum or an aluminum alloy.

A type, size, shape, or the like of the second electrode 220 is not particularly limited as long it has conductivity and does not cause a chemical change in the secondary battery 20.

A cross-sectional shape of the second electrode 220 may be designed to have any of various shapes in addition to the rectangular shape shown in FIG. 4.

A second active material layer 221 may be applied on at least a portion of the second electrode 220. The second active material layer 221 may be applied on both, or opposite, surfaces of the second electrode 220, or may be applied on only one surface of the second electrode 220.

In the example embodiment, the second electrode 220 functions as the positive electrode, and the second active material layer 221 may include a positive electrode active material.

The positive electrode active material may be a compound capable of reversible intercalation and deintercalation of lithium (a lithiated intercalation compound). In an embodiment, one or more types of a composite oxide of lithium and a metal selected from cobalt, manganese, nickel, iron, and a combination thereof may be used.

For example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, x+y+z=1 may be satisfied.

The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), or may include two or more, or all, of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The second active material layer 221 may further include a positive electrode conductive material.

The positive electrode conductive material is used to impart conductivity to the second active material layer 221, and any suitable material which does not cause a chemical change and is electronically conductive may be used.

Examples of the positive electrode conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer, such as a polyphenylene derivative or the like, or a mixture thereof.

The second active material layer 221 may further include a positive electrode binder.

The positive electrode binder attaches the particles constituting the positive electrode active material to each other well, and also attaches the positive electrode active material to the second electrode 220 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, a cellulose-based compound capable of imparting viscosity may be further included. As the cellulose-based compound, one or more types of carboxymethyl cellulose, hydroxypropylmethyl cellulose, methyl cellulose, or alkali metal salts thereof may be used in combination. Na, K, or Li may be used as the alkali metal.

The dry binder is a polymer material capable of fiberization and may be, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 on which the second active material layer 221 is not applied.

The second uncoated portion 222 according to an embodiment may be disposed at an upper end region of the second electrode 220 disposed to face the opening 160 in the case 100. However, a form of the second uncoated portion 222 is not limited thereto, and, in an embodiment, may be formed over an entire edge region of the second electrode 220.

The separator 230 may be disposed between the first electrode 210 and the second electrode 220. The separator 230 may prevent or substantially prevent a short circuit between the first electrode 210 and the second electrode 220 while allowing lithium ions to move between the first electrode 210 and the second electrode 220.

In an embodiment, the separator 230 may be disposed to entirely cover a surface region of the electrode assembly 200. Accordingly, the separator 230 may prevent or substantially prevent the first electrode 210 and the second electrode 220 from being directly exposed to the outside of the electrode assembly 200.

As the separator 230, polyethylene, polypropylene, polyvinylidene fluoride, or a multilayer film of two or more layers thereof may be used, and a mixed multilayer film, such as a polyethylene/polypropylene two-layer separator, a polyethylene/polypropylene/polyethylene three-layer separator, a polypropylene/polyethylene/polypropylene three-layer separator, or the like, may be used.

The separator 230 may include a porous substrate and a coating layer containing an organic material, an inorganic material, or a combination thereof located on one surface or both surfaces of the porous substrate.

The porous substrate may be a polymer film formed of a polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

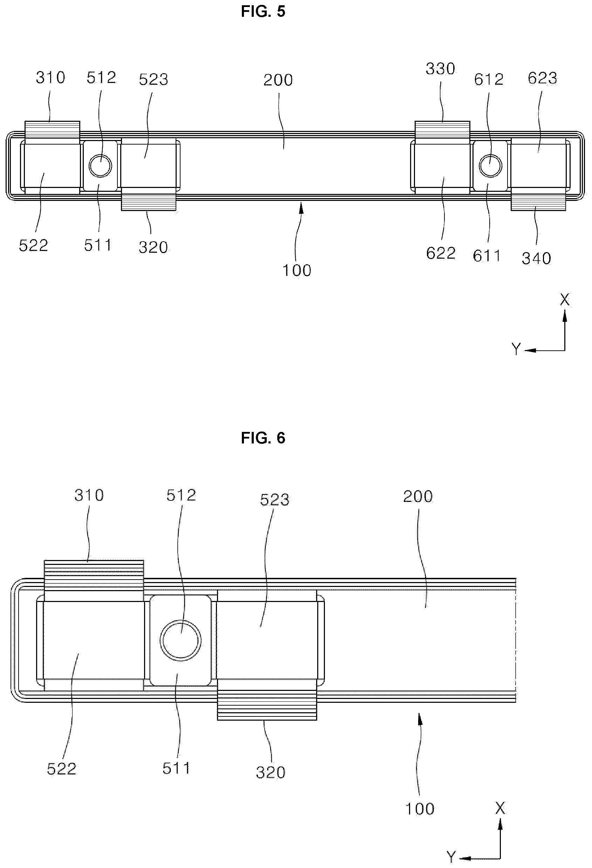

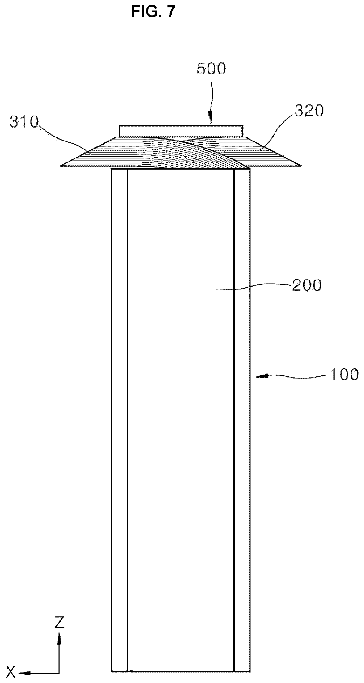

FIG. 5 is a plan view schematically illustrating the configuration of the secondary battery according to an embodiment of the present disclosure; FIG. 6 is a partial enlarged plan view schematically illustrating the configuration of the secondary battery according to an embodiment of the present disclosure; and FIG. 7 is a cross-sectional view schematically illustrating the configuration of the secondary battery according to an embodiment of the present disclosure.

Referring to FIGS. 2 to 7, the negative electrode tab 301 is connected to the first electrode 210 and may protrude outward from the electrode assembly 200.

The negative electrode tab 301 according to an embodiment may extend from the electrode assembly 200 in the second direction. That is, the negative electrode tab 301 may extend toward the opening 160 from the inside of the case 100. The negative electrode tab 301 may be bent in the first direction or in a direction opposite to the first direction.

The negative electrode tab 301 according to an embodiment may include a first negative electrode tab 310 and a second negative electrode tab 320.

The first negative electrode tab 310 and the second negative electrode tab 320 may be spaced apart along a direction opposite to the third direction. For example, the first negative electrode tab 310 and the second negative electrode tab 320 may be sequentially disposed along the direction opposite to the third direction.

The second negative electrode tab 320 may be disposed at a position spaced apart from the first negative electrode tab 310 by an interval (e.g., a set interval) in the direction opposite to the third direction. The first negative electrode tab 310 may be disposed at a position relatively closer to the first side surface portion 140 than the second negative electrode tab 320.

The first negative electrode tab 310 according to an embodiment may have a foil shape extending from the first uncoated portion 212 of the first electrode 210 in the second direction.

In an embodiment, the first negative electrode tab 310 may have a substantially rectangular shape. However, the shape of the first negative electrode tab 310 is not limited thereto, and may have any of various shapes.

In an embodiment, the first negative electrode tab 310 may be formed integrally with the first electrode 210. For example, the first negative electrode tab 310 may be a remaining region of the first uncoated portion 212 which remains after a partial region of the first uncoated portion 212 is cut or removed by notching processing or the like. In another embodiment, the first negative electrode tab 310 may be manufactured separately from the first electrode 210 and then connected to the first uncoated portion 212 by welding or the like. In an embodiment, a material of the first negative electrode tab 310 may be the same as a material of the first electrode 210.

A plurality of first negative electrode tabs 310 may be provided. A number of first negative electrode tabs 310 may be the same as the number of first electrodes 210. Each first negative electrode tab 310 may individually extend from the first uncoated portions 212 of respective first electrodes 210.

Neighboring first negative electrode tabs 310 may be disposed to face each other along the first direction. The neighboring first negative electrode tabs 310 may be disposed parallel to each other. Accordingly, the first negative electrode tab 310 according to the embodiment may be an assembly of a plurality of unit negative electrode tabs stacked along the first direction.

The neighboring first negative electrode tabs 310 may be in contact with each other and may also be spaced apart from each other by a thickness of the separator 230. The first negative electrode tab 310 may be bent in the first direction or in the direction opposite to the first direction.

The second negative electrode tab 320 according to an embodiment may have a foil shape extending from the first uncoated portion 212 of the first electrode 210 in the second direction.

The second negative electrode tab 320 may be disposed at a position spaced apart from the first negative electrode tab 310 by an interval (e.g., a set interval) in the direction opposite to the third direction.

In an embodiment, the second negative electrode tab 320 may have a substantially rectangular shape. However, the shape of the second negative electrode tab 320 is not limited thereto, and may have any of various shapes.

In an embodiment, the second negative electrode tab 320 may be formed integrally with the first electrode 210. For example, the second negative electrode tab 320 may be a region excluding the first negative electrode tab 310 among the remaining region of the first uncoated portion 212 which remains after the partial region of the first uncoated portion 212 is cut or removed by notching processing or the like. In another embodiment, the second negative electrode tab 320 may be manufactured separately from the first electrode 210 and then connected to the first uncoated portion 212 by welding or the like. In an embodiment, a material of the second negative electrode tab 320 may be the same as the material of the first electrode 210.

A plurality of second negative electrode tabs 320 may be provided. A number of second negative electrode tabs 320 may be the same as the number of first electrodes 210. Each second negative electrode tab 320 may individually extend from the first uncoated portions 212 of different first electrodes 210.

Neighboring second negative electrode tabs 320 may be disposed to face each other along the first direction. The neighboring second negative electrode tabs 320 may be disposed parallel to each other. Accordingly, the second negative electrode tab 320 according to an embodiment may be an assembly of a plurality of unit negative electrode tabs stacked along the first direction.

The neighboring second negative electrode tabs 320 may be in contact with each other and may be spaced apart from each other by the thickness of the separator 230. The second negative electrode tab 320 may be bent in the first direction or in the direction opposite to the first direction.

In an embodiment, the first negative electrode tab 310 and the second negative electrode tab 320 may be bent in opposite directions. For example, if the first negative electrode tab 310 is bent in the first direction, the second negative electrode tab 320 may be bent in the direction opposite to the first direction, and if the first negative electrode tab 310 is bent in the direction opposite to the first direction, the second negative electrode tab 320 may be bent in the first direction.

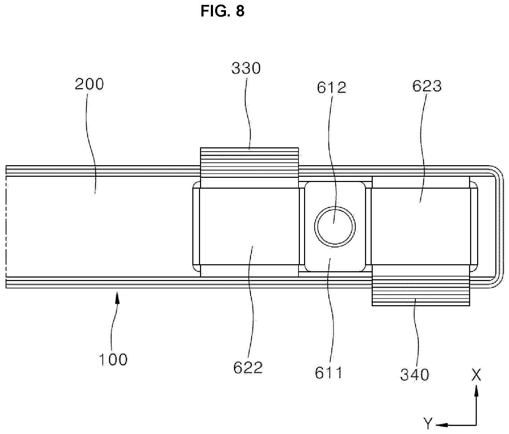

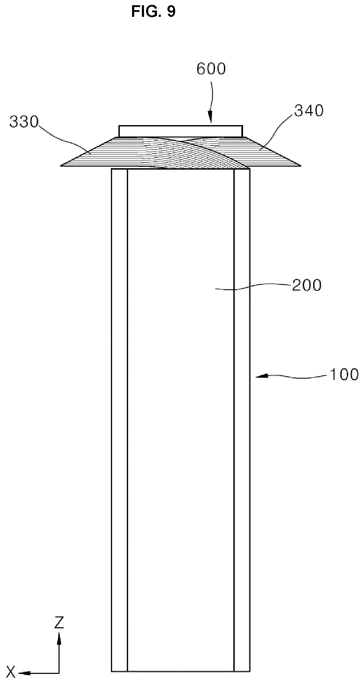

FIG. 8 is a partial enlarged plan view schematically illustrating the configuration of the secondary battery according to an embodiment of the present disclosure; and FIG. 9 is a cross-sectional view schematically illustrating the configuration of the secondary battery according to an embodiment of the present disclosure.

Referring to FIGS. 2, 5, 8, and 9, the positive electrode tab 302 is connected to the second electrode 220 and may protrude outward from the electrode assembly 200.

The positive electrode tab 302 according to an embodiment may extend from the electrode assembly 200 in the second direction. That is, the positive electrode tab 302 may extend toward the opening 160 from the inside of the case 100.

The negative electrode tab 301 and the positive electrode tab 302 may be disposed to be spaced apart from each other along the third direction. For example, the negative electrode tab 301 may be disposed at a position spaced apart from the positive electrode tab 302 by an interval (e.g., a set interval) along the third direction.

The positive electrode tab 302 may be bent in the first direction or in the direction opposite to the first direction. In an embodiment, the negative electrode tab 301 and the positive electrode tab 302 may be bent in opposite directions. For a non-limiting example, if the negative electrode tab 301 is bent in the first direction, the positive electrode tab 302 may be bent in the direction opposite to the first direction, and if the negative electrode tab 301 is bent in the direction opposite to the first direction, the positive electrode tab 302 may be bent in the first direction.

The positive electrode tab 302 according to an embodiment may include a first positive electrode tab 330 and a second positive electrode tab 340.

The first positive electrode tab 330 and the second positive electrode tab 340 may be spaced apart along the direction opposite to the third direction. For a non- limiting example, the first positive electrode tab 330 and the second positive electrode tab 340 may be sequentially disposed along the direction opposite to the third direction.

The first positive electrode tab 330 may be disposed at a position spaced apart from the second positive electrode tab 340 by an interval (e.g., a set interval) in the third direction. The second positive electrode tab 340 may be disposed at a position relatively closer to the second side surface portion 150 than the first positive electrode tab 330.

The first positive electrode tab 330 according to an embodiment may have a foil shape extending from the second uncoated portion 222 of the second electrode 220 in the second direction.

In an embodiment, the first positive electrode tab 330 may have a substantially rectangular shape. However, a shape of the first positive electrode tab 330 is not limited thereto, and may have any of various shapes.

In an embodiment, the first positive electrode tab 330 may be formed integrally with the second electrode 220. For example, the first positive electrode tab 330 may be a remaining region of the second uncoated portion 222 which remains after a partial region of the second uncoated portion 222 is cut or removed by notching processing or the like. In another embodiment, the first positive electrode tab 330 may be manufactured separately from the second electrode 220 and then connected to the second uncoated portion 222 by welding or the like. In an embodiment, a material of the first positive electrode tab 330 may be the same as a material of the second electrode 220.

A plurality of first positive electrode tabs 330 may be provided. A number of first positive electrode tabs 330 may be the same as the number of second electrodes 220. Each first positive electrode tab 330 may individually extend from the second uncoated portions 222 of respective second electrodes 220.

Neighboring first positive electrode tabs 330 may be disposed to face each other along the first direction. The neighboring first positive electrode tabs 330 may be disposed parallel to each other. Accordingly, the first positive electrode tab 330 according to an embodiment may be an assembly of a plurality of unit positive electrode tabs stacked along the first direction.

The neighboring first positive electrode tabs 330 may be in contact with each other and may be spaced apart from each other by the thickness of the separator 230. The second negative electrode tab 320 may be disposed between the first negative electrode tab 310 and the first positive electrode tab 330.

The first positive electrode tab 330 may be bent in the first direction or in the direction opposite to the first direction. In an embodiment, the first negative electrode tab 310 and the first positive electrode tab 330 may be bent in the same direction.

The second positive electrode tab 340 according to an embodiment may have a foil shape extending from the second uncoated portion 222 of the second electrode 220 in the second direction.

The second positive electrode tab 340 may be disposed at a position spaced apart from the first positive electrode tab 330 by an interval (e.g., a set interval) in the direction opposite to the third direction.

In an embodiment, the second positive electrode tab 340 may have a substantially rectangular shape. However, a shape of the second positive electrode tab 340 is not limited thereto, and may have any of various shapes.

In an embodiment, the second positive electrode tab 340 may be formed integrally with the second electrode 220. For example, the second positive electrode tab 340 may be a region excluding the first positive electrode tab 330 among the remaining region of the second uncoated portion 222 which remains after the partial region of the second uncoated portion 222 is cut or removed by notching processing or the like. In another embodiment, the second positive electrode tab 340 may be manufactured separately from the second electrode 220 and then connected to the second uncoated portion 222 by welding or the like. In an embodiment, a material of the second positive electrode tab 340 may be the same as the material of the second electrode 220.

A plurality of second positive electrode tabs 340 may be provided. A number of second positive electrode tabs 340 may be the same as the number of second electrodes 220. Each second positive electrode tab 340 may individually extend from the second uncoated portions 222 of respective second electrodes 220.

Neighboring second positive electrode tabs 340 may be disposed to face each other along the first direction. The neighboring second positive electrode tabs 340 may be disposed parallel to each other. Accordingly, the second positive electrode tab 340 according to an embodiment may be an assembly of a plurality of unit positive electrode tabs stacked along the first direction.

The neighboring second positive electrode tabs 340 may be in contact with each other and may be spaced apart from each other by the thickness of the separator 230. The second positive electrode tab 340 may be bent in the first direction or in the direction opposite to the first direction.

The first positive electrode tab 330 and the second positive electrode tab 340 may be bent in opposite directions. For a non-limiting example, if the first positive electrode tab 330 is bent in the first direction, the second positive electrode tab 340 may be bent in the direction opposite to the first direction, and if the first positive electrode tab 330 is bent in the direction opposite to the first direction, the second positive electrode tab 340 may be bent in the first direction.

The first positive electrode tab 330 may be disposed between the second negative electrode tab 320 and the second positive electrode tab 340. The second negative electrode tab 320 and the first positive electrode tab 330 may be disposed between the first negative electrode tab 310 and the second positive electrode tab 340. In an embodiment, the second negative electrode tab 320 and the second positive electrode tab 340 may be bent in the same direction.

Referring to FIGS. 2 to 9, the cap assembly 400 according to an embodiment may be coupled to the case 100 and seal the case 100. The cap assembly 400 may be disposed to face the electrode assembly 200 along the second direction.

The cap assembly 400 may include a cap plate 410, a first terminal 420, and a second terminal 430.

The cap plate 410 generally forms an exterior of the cap assembly 400 and may support (e.g., entirely support) the first terminal 420 and the second terminal 430.

The cap plate 410 according to an embodiment may be formed to have a flat plate shape. The cap plate 410 may be disposed in the opening 160 of the case 100. The cap plate 410 may be disposed to face the electrode assembly 200 along the second direction.

The cap plate 410 may be disposed at a position spaced apart from the electrode assembly 200 by a distance (e.g., a set distance) in the second direction. The cap plate 410 may be disposed parallel to the bottom portion 110 of the case 100.

The cap plate 410 may be seated on an upper end portion of the case 100, such as on upper end portions of the front surface portion 120, the rear surface portion 130, the first side surface portion 140, and the second side surface portion 150. The cap plate 410 may be coupled to the case 100 by any of various types of coupling methods, such as welding, bolting, fitting, latching and the like.

The first terminal 420 may protrude outward from the cap plate 410. The first terminal 420 may be electrically connected to the first electrode 210. In an embodiment, the first electrode 210 functions as a negative electrode, and the first terminal 420 may be a negative electrode terminal of the secondary battery 20.

The first terminal 420 according to an embodiment may be inserted into the cap plate 410. An upper end portion of the first terminal 420 may protrude from the cap plate 410 in the second direction.

FIG. 3 illustrates an example in which the first terminal 420 has a rectangular cross-sectional shape, but the cross-sectional shape of the first terminal 420 is not limited thereto, and may have any of various shapes, such as a circular shape, an oval shape, a polygonal shape, and the like. The first terminal 420 may be formed of an electrically conductive material, such as aluminum, nickel, copper, or the like.

A central axis passing through a central portion of the first terminal 420 in the second direction may be disposed between the first negative electrode tab 310 and the second negative electrode tab 320.

A first gasket 421 may be installed between the cap plate 410 and the first terminal 420. The first gasket 421 may electrically insulate the cap plate 410 and the first terminal 420 and prevent or substantially prevent moisture or foreign substances from entering between the cap plate 410 and the first terminal 420.

The first gasket 421 may be formed of an insulating material, such as polyethylene (PE), polypropylene (PP), polyethylene terephthalate (PET), rubber, or the like. The first gasket 421 may be fixed between the cap plate 410 and the first terminal 420 by pressing, injection, adhesion, or the like.

The second terminal 430 may protrude outward from the cap plate 410 at a position spaced apart from the first terminal 420. The second terminal 430 may be electrically connected to the second electrode 220. In an embodiment, the second electrode 220 functions as a positive electrode, and the second terminal 430 may be a positive electrode terminal of the secondary battery 20.

The second terminal 430 according to an embodiment may be inserted into the cap plate 410. An upper end portion of the second terminal 430 may protrude from the cap plate 410 in the second direction.

FIG. 3 illustrates an example in which the second terminal 430 has a rectangular cross-sectional shape, but the cross-sectional shape of the second terminal 430 is not limited thereto, and may have any of various shapes, such as a circular shape, an oval shape, a polygonal shape, and the like. The second terminal 430 may be formed of an electrically conductive material, such as aluminum, nickel, copper, or the like.

The second terminal 430 may be disposed at a position spaced apart from the first terminal 420 by a distance (e.g., a set distance) along the direction opposite to the third direction. A central axis passing through a central portion of the second terminal 430 in the second direction may be disposed between the first positive electrode tab 330 and the second positive electrode tab 340.

A second gasket 431 may be installed between the cap plate 410 and the second terminal 430. The second gasket 431 may electrically insulate the cap plate 410 and the second terminal 430 and prevent or substantially prevent moisture or foreign substances from entering between the cap plate 410 and the second terminal 430.

The second gasket 431 may be formed of an insulating material, such as polyethylene (PE), polypropylene (PP), polyethylene terephthalate (PET), rubber, or the like. The second gasket 431 may be fixed between the cap plate 410 and the second terminal 430 by pressing, injection, adhesion, or the like.

The cap assembly 400 according to an embodiment may further include a vent hole 440 and a vent 450.

The vent hole 440 may be formed to have a hole shape which vertically passes through both, or opposite, sides of the cap plate 410 in the second direction. The vent hole 440 may provide a path through which flames, gas, smoke, or the like formed in the case 100 may be discharged to the outside of the case 100 if thermal runaway of the secondary battery 20 occurs due to an overcurrent or the like.

The vent hole 440 may be disposed between the first terminal 420 and the second terminal 430. A cross-sectional shape of the vent hole 440 may be designed to have any of various shapes, such as an oval shape, a circular shape, a polygonal shape, and the like.

The vent 450 is installed in the vent hole 440 and may be opened and closed in response to a change in internal pressure of the case 100. That is, the vent 450 may prevent or substantially prevent an electrolyte and the like in the case 100 from leaking out of the case 100 or moisture, foreign substances, and the like from entering the case 100 by closing the vent hole 440 when the secondary battery 20 normally operates.

The vent 450 may guide flames, gas, smoke, or the like formed in the case 100 to be discharged to the outside of the case 100 by opening the vent hole 440 if thermal runaway of the secondary battery 20 occurs.

The vent 450 may be formed to have a generally plate shape. The vent 450 may be fixed to the case 100 by any of various types of coupling methods, such as welding, bolting, fitting, and the like. The vent 450 may be disposed in the vent hole 440, or disposed to face the vent hole 440 at an upper or lower side of the cap plate 410 along the second direction.

In an embodiment, a thickness of the vent 450 parallel to the second direction may be smaller than a thickness of the cap plate 410. Accordingly, the vent 450 may be easily ruptured or broken if the internal pressure of the case 100 increases. In an embodiment, the vent 450 may include a notch formed concavely toward the inside of the vent 450 such that the notch preferentially breaks if the internal pressure of the case 100 increases.

The cap assembly 400 according to an embodiment may further include an electrolyte inlet 460 formed to pass through the cap plate 410 and in which a sealing stopper may be installed.

The electrolyte inlet 460 may be disposed between the first terminal 420 and the second terminal 430.

The cap assembly 400 according to an embodiment may further include an insulating plate 470.

The insulating plate 470 may be disposed between the cap plate 410 and the electrode assembly 200. The insulating plate 470 may prevent or substantially prevent direct contact between the cap plate 410 and the electrode assembly 200 to insulate the cap plate 410 and the electrode assembly 200.

The insulating plate 470 may fix the position of the electrode assembly 200 in the case 100. The insulating plate 470 may prevent or substantially prevent the electrode assembly 200 from being damaged when the cap plate 410 is deformed toward the inside of the case 100 due to an external impact or the like.

The insulating plate 470 according to an embodiment may be disposed to face the electrode assembly 200 in the case 100 along the second direction. The electrode assembly 200, the insulating plate 470, and the cap plate 410 may be sequentially disposed along the second direction.

The insulating plate 470 may be fixed to an inner side surface of the case 100 by any of various types of coupling methods, such as fitting, welding, bolting, latching, adhesion, and the like.

The insulating plate 470 may be in contact with a surface of the electrode assembly 200 from which the negative electrode tab 301 and the positive electrode tab 302 extend. The insulating plate 470 may be formed of an insulating material, such as polyethylene (PE), polypropylene (PP), polyethylene terephthalate (PET), rubber, or the like.

The first connection member 500 may be disposed between the electrode assembly 200 and the cap assembly 400. The first connection member 500 may be connected to the first terminal 420 and the negative electrode tab 301.

The first connection member 500 may electrically connect the first terminal 420 and the negative electrode tab 301. The first connection member 500 may be formed of a material which is electrically conductive. In an embodiment, the first connection member 500 may be formed of a same material as the first terminal 420.

The first connection member 500 according to an embodiment may include a first current collector 510 and a first current collector plate 520.

The first current collector 510 may be connected to the first terminal 420.

The first current collector 510 according to an embodiment may include a first body 511 and a first boss 512.

The first body 511 may form the exterior of a side of the first current collector 510 and support the first boss 512. The first body 511 may be disposed between the electrode assembly 200 and the first terminal 420.

The first body 511 may be disposed in the insulating plate 470, or may be disposed at an upper or lower side of the insulating plate 470. A cross-sectional shape of the first body 511 may have any of various shapes, such as any of a circular shape, an oval shape, a polygonal shape, and the like, in addition to the quadrangular shape shown in FIG. 3.

The first boss 512 may extend from the first body 511 and may be connected to the first terminal 420. The first boss 512 may have a cylindrical shape extending from the first body 511 in the second direction.

An upper end surface of the first boss 512 may be in contact with a lower surface of the first terminal 420. The first boss 512 may vertically pass through the insulating plate 470 in the second direction.

In an embodiment, the upper end surface of the first boss 512 may be joined to the lower surface of the first terminal 420 by laser welding. A cross-sectional shape of the first boss 512 may have any of various shapes, such as an oval shape, a polygonal shape, and the like, in addition to the circular shape shown in FIG. 3.

The first current collector plate 520 may be fixed to the first current collector 510 and connected to the negative electrode tab 301.

The first current collector plate 520 according to an embodiment may include a negative electrode tab center plate 521, a first negative electrode tab plate 522, and a second negative electrode tab plate 523.

The negative electrode tab center plate 521 may form the exterior of the center of the first current collector plate 520 and may be connected to the first current collector 510.

The negative electrode tab center plate 521 may be disposed between the first body 511 and the electrode assembly 200. The negative electrode tab center plate 521 may be in contact with a lower surface of the first body 511 located at an opposite side of the first boss 512.

The negative electrode tab center plate 521 may be fixed to the lower surface of the first body 511 by any of various types of coupling methods, such as welding, bolting, adhesion, and the like.

Both, or opposite, end portions of the negative electrode tab center plate 521 may extend toward the electrode assembly 200 from the first body 511. Both, or opposite, end portions of the negative electrode tab center plate 521 may pass through the insulating plate 470 and may be disposed at the lower side of the insulating plate 470.

The first negative electrode tab plate 522 may extend from the first current collector 510 in the third direction.

The first negative electrode tab plate 522 may extend from an end portion of the negative electrode tab center plate 521 in the third direction. The first negative electrode tab plate 522 may be disposed to face the first negative electrode tab 310 along the first direction. The first negative electrode tab plate 522 may be in contact with an end surface of the first negative electrode tab 310.

In an embodiment, the first negative electrode tab 310 and the first negative electrode tab plate 522 may be joined by laser welding. The first negative electrode tab 310 and the first negative electrode tab plate 522 which are bent in the first direction may be laser welded.

Referring to FIGS. 6 and 7, the first negative electrode tab 310 disposed at a side (an upper side based on FIG. 6 and a left side based on FIG. 7) among the plurality of first negative electrode tabs 310 may not be welded to the first negative electrode tab plate 522.

The second negative electrode tab plate 523 may extend from the first current collector 510 in the direction opposite to the third direction.

The second negative electrode tab plate 523 may extend from another, or opposite, end portion of the negative electrode tab center plate 521 in the direction opposite to the third direction. The second negative electrode tab plate 523 may be disposed to face the second negative electrode tab 320 along the second direction. The second negative electrode tab plate 523 may be in contact with an end surface of the second negative electrode tab 320.

In an embodiment, the second negative electrode tab 320 and the second negative electrode tab plate 523 may be joined by laser welding. The second negative electrode tab 320 and the second negative electrode tab plate 523 which are bent in the direction opposite to the first direction may be laser welded.

Referring to FIGS. 6 and 7, the second negative electrode tab 320 disposed at the another side (a lower side based on FIG. 6 and a right side based on FIG. 7) among the plurality of second negative electrode tabs 320 may not be welded to the second negative electrode tab plate 523.

The first negative electrode tab 310 and the second negative electrode tab 320 are welded to the first current collector plate 520 in a state in which the first negative electrode tab 310 is bent in the first direction and the second negative electrode tab 320 is bent in the direction opposite to the first direction, and electrical stability may be secured due to a complementary welded structure.

The second connection member 600 may be disposed between the electrode assembly 200 and the cap assembly 400. The second connection member600 may be connected to the second terminal 430 and the positive electrode tab 302.

The second connection member 600 may electrically connect the second terminal 430 and the positive electrode tab 302. The second connection member 600 may be formed of a material which is electrically conductive. In an embodiment, the second connection member 600 may be formed of a same material as the second terminal 430.

The second connection member 600 according to an embodiment may include a second current collector 610 and a second current collector plate 620.

The second current collector 610 may be connected to the second terminal 430.

The second current collector 610 according to an embodiment may include a second body 611 and a second boss 612.

The second body 611 may form the exterior of a side of the second current collector 610 and support the second boss 612. The second body 611 may be disposed between the electrode assembly 200 and the second terminal 430.

The second body 611 may be disposed in the insulating plate 470, or may be disposed at an upper or lower side of the insulating plate 470. A cross-sectional shape of the second body 611 may have any of various shapes, such as a circular shape, an oval shape, a polygonal shape, and the like, in addition to the quadrangular shape shown in FIG. 3.

The second boss 612 may extend from the second body 611 and may be connected to the second terminal 430. The second boss 612 may have a cylindrical shape extending from the second body 611 in the second direction.

An upper end surface of the second boss 612 may be in contact with a lower surface of the second terminal 430. The second boss 612 may vertically pass through the insulating plate 470 in the second direction.

In an embodiment, the upper end surface of the second boss 612 may be joined to the lower surface of the second terminal 430 by laser welding. A cross-sectional shape of the second boss 612 may have any of various shapes, such as an oval shape, a polygonal shape, and the like, in addition to the circular shape shown in FIG. 3.

The second current collector plate 620 may be fixed to the second current collector 610 and connected to the positive electrode tab 302.

The second current collector plate 620 according to an embodiment may include a positive electrode tab center plate 621, a first positive electrode tab plate 622, and a second positive electrode tab plate 623.

The positive electrode tab center plate 621 may form the exterior of the center of the second current collector plate 620 and may be connected to the second current collector 610.

The positive electrode tab center plate 621 may be disposed between the second body 611 and the electrode assembly 200. The positive electrode tab center plate 621 may be in contact with a lower surface of the second body 611 located at an opposite side of the second boss 612.

The positive electrode tab center plate 621 may be fixed to the lower surface of the second body 611 by any of various types of coupling methods, such as welding, bolting, adhesion, and the like.

Both, or opposite, end portions of the positive electrode tab center plate 621 may extend toward the electrode assembly 200 from the second body 611. Both, or opposite, end portions of the positive electrode tab center plate 621 may pass through the insulating plate 470 and may be disposed at the lower side of the insulating plate 470.

The first positive electrode tab plate 622 may extend from the second current collector 610 in the third direction.

The first positive electrode tab plate 622 may extend from an end portion of the positive electrode tab center plate 621 in the third direction.

The first positive electrode tab plate 622 may be disposed to face the first positive electrode tab 330 along the second direction. The first positive electrode tab plate 622 may be in contact with an end surface of the first positive electrode tab 330.

In an embodiment, the first positive electrode tab 330 and the first positive electrode tab plate 622 may be joined by laser welding. The first positive electrode tab 330 and the first positive electrode tab plate 622 which are bent in the first direction may be laser welded.

Referring to FIGS. 8 and 9, the first positive electrode tab 330 disposed at a side (an upper side based on FIG. 8 and a right side based on FIG. 9) among the plurality of first positive electrode tabs 330 may not be welded to the first positive electrode tab plate 622.

The second positive electrode tab plate 623 may extend from the second current collector 610 in the direction opposite to the third direction.

The second positive electrode tab plate 623 may extend from another, or opposite, end portion of the positive electrode tab center plate 621 in the direction opposite to the third direction. The second positive electrode tab plate 623 may be disposed to face the second positive electrode tab 340 along the second direction. The second positive electrode tab plate 623 may be in contact with an end surface of the second positive electrode tab 340.

In an embodiment, the second positive electrode tab 340 and the second positive electrode tab plate 623 may be joined by laser welding. The second positive electrode tab 340 and the second positive electrode tab plate 623 which are bent in the direction opposite to the first direction may be laser welded.

Referring to FIGS. 8 and 9, the second positive electrode tab 340 disposed at the another side (a lower side based on FIG. 8 and a left side based on FIG. 9) among the plurality of second positive electrode tabs 340 may not be welded to the second positive electrode tab plate 623.

The first positive electrode tab 330 and the second positive electrode tab 340 are welded to the second current collector plate 620 in a state in which the first positive electrode tab 330 is bent in the first direction and the second positive electrode tab 340 is bent in the direction opposite to the first direction, and electrical stability may be secured due to a complementary welded structure.

A plurality of secondary batteries 20 according to an embodiment may be provided. The plurality of secondary batteries 20 may be arranged in two or more rows along at least one of the longitudinal direction (the X-axis direction based on FIG. 1) and the width direction (the Y-axis direction based on FIG. 1) of the housing 10.

FIG. 1 illustrates that the plurality of secondary batteries 20 are arranged in six rows along the longitudinal direction of the housing 10, but an arrangement of the plurality of secondary batteries 20 is not limited thereto and may be designed to have any of various arrangements.

The plurality of secondary batteries 20 may be disposed in parallel. The number of secondary batteries 20 may be designed in various ways depending on a size, shape, and the like of the housing 10.

The first terminal 420 of one secondary battery 20 among a pair of neighboring secondary batteries 20 and the second terminal 430 of the other of the pair of neighboring secondary batteries 20 may be disposed to face each other along the longitudinal direction of the housing 10.

The front surface portion 120 of one of the pair of neighboring secondary batteries 20 may be disposed to face the rear surface portion 130 of the other of the pair of neighboring secondary batteries 20.

The plurality of secondary batteries 20 may be electrically connected by a bus bar 30.

The bus bar 30 according to an embodiment may be disposed between the cover 12 and the secondary battery 20. A plurality of bus bars 30 may be provided. Each bus bar 30 may connect the pair of neighboring secondary batteries 20 in series or parallel.

Both, or opposite, sides of the bus bar 30 may be respectively connected to the first terminal 420 of one of the pair of neighboring secondary batteries 20 and the second terminal 430 of the other of the pair of neighboring secondary batteries 20. Accordingly, a plurality of secondary batteries 20 may be connected to each other in series by the bus bar 30.

However, the bus bar 30 is not limited to this connection form, and may also be respectively connected to the first terminal 420 of one of the pair of neighboring secondary batteries 20 and the first terminal 420 of the other of the pair of neighboring secondary batteries 20 or respectively connected to the second terminal 430 of one of the pair of neighboring secondary batteries 20 and the second terminal 430 of the other of the pair of neighboring secondary batteries 20.

The bus bar 30 may be formed of an electrically conductive material, such as copper, aluminum, nickel, or the like. However, a specific shape of the bus bar 30 is not limited to that shown in FIG. 1, and may have any of various shapes capable of electrically connecting neighboring secondary batteries 20.

The plurality of bus bars 30 may be supported in the housing 10 by a bus bar holder 40.

The bus bar holder 40 according to an embodiment may be formed to have a flat plate shape. The bus bar holder 40 may be disposed between the cover 12 and the secondary batteries 20.

The bus bar 30 may be fixed to the bus bar holder 40 by any of various types of coupling methods, such as fitting, bolting, injection coupling, and the like. In an embodiment, the bus bar holder 40 may be configured to include an electrically insulating polymer compound material.

According to one or more embodiments of the present disclosure, unwelded electrodes can be prevented or substantially prevented from occurring due to a complementary welding structure in which a first negative electrode tab and a first positive electrode tab are bent in the same direction, and a second negative electrode tab and a second positive electrode tab are bent in a direction opposite to the bending direction of the first negative electrode tab and the first positive electrode tab. Accordingly, locally occurring deterioration of a secondary battery can be equalized.

However, aspects and effects obtainable through the present disclosure are not limited to the above aspects and effects, and other technical aspects and effects that are not mentioned may be clearly understood by those skilled in the art from the description of the present disclosure.

While the present disclosure has been described with reference to some example embodiments shown in the drawings, these embodiments are merely illustrative, and it is to be understood that various modifications and equivalent other embodiments can be derived by those skilled in the art on the basis of the embodiments. Therefore, the technical scope of the present disclosure should be defined by the claims.

## Claims

1. An electrode assembly (200) comprising:
a first electrode (210);
a second electrode (220) facing the first electrode (210) along a first direction;
a negative electrode tab (301) extending from the first electrode (210) and bent in the first direction or in a direction opposite to the first direction; and
a positive electrode tab (302) extending from the second electrode (220) and bent in the first direction or in the direction opposite to the first direction.

2. The electrode assembly (200) as claimed in claim 1, wherein the negative electrode tab (301) and the positive electrode tab (302) are bent in opposite directions.

3. The electrode assembly (200) as claimed in claim 1, wherein the negative electrode tab (301) extends from the first electrode (210) along a second direction intersecting the first direction.

4. The electrode assembly (200) as claimed in claim 3, wherein the negative electrode tab (301) comprises:
a first negative electrode tab (310); and
a second negative electrode tab (320) spaced apart from the first negative electrode tab (310).

5. The electrode assembly (200) as claimed in claim 4, wherein the first negative electrode tab (310) and the second negative electrode tab (320) are spaced apart from each other along a third direction intersecting the first direction and the second direction.

6. The electrode assembly (200) as claimed in claim 4, wherein
the first negative electrode tab (310) is bent in the first direction or in the direction opposite to the first direction, and
the second negative electrode tab (320) is bent in the first direction or in the direction opposite to the first direction.

7. The electrode assembly (200) as claimed in claim 6, wherein the first negative electrode tab (310) and the second negative electrode tab (320) are bent in opposite directions.

8. The electrode assembly (200) as claimed in claims 4 to 7, wherein the positive electrode tab (302) extends from the second electrode (220) along the second direction.

9. The electrode assembly (200) as claimed in claim 8, wherein the positive electrode tab (302) comprises:
a first positive electrode tab (330); and
a second positive electrode tab (340) spaced apart from the first positive electrode tab (330) and/or wherein the first positive electrode tab (330) and the second positive electrode tab (340) are spaced apart from each other along a third direction intersecting the first direction and the second direction.

10. A secondary battery (20) comprising:
a case (100);
an electrode assembly (200) accommodated in the case (100) and comprising a negative electrode tab (301) and a positive electrode tab (302) that are bent in opposite directions;
a cap assembly (400) facing the electrode assembly (200) and comprising a first terminal (420) and a second terminal (430);
a first connection member (500) between the electrode assembly (200) and the cap assembly (400) and connected to the first terminal (420) and the negative electrode tab (301); and
a second connection member (600) between the electrode assembly (200) and the cap assembly (400) and connected to the second terminal (430) and the positive electrode tab (302).

11. The secondary battery (20) as claimed in claim 10, wherein
the negative electrode tab (301) comprises a first negative electrode tab (310) and a second negative electrode tab (320) extending from the electrode assembly (200) and bent in opposite directions, and
the positive electrode tab (302) comprises a first positive electrode tab (330) and a second positive electrode tab (340) extending from the electrode assembly (200) and bent in opposite directions.

12. The secondary battery (20) as claimed in claim 11, wherein the first connection member (500) comprises:
a first current collector (510) connected to the first terminal (420);
a first negative electrode tab plate (522) connected to the first negative electrode tab (310); and
a second negative electrode tab plate (523) connected to the second negative electrode tab (320).

13. The secondary battery (20) as claimed in claim 11, wherein the second connection member (600) comprises:
a second current collector (610) connected to the second terminal (430);
a first positive electrode tab plate (622) connected to the first positive electrode tab (330); and
a second positive electrode tab plate (623) connected to the second positive electrode tab (340).

14. The secondary battery (20) as claimed in claims 10 to 13, wherein the secondary battery (20) comprises:
an insulating plate (470) disposed between a cap plate (410) and the electrode assembly (200).

15. A battery pack comprising:
a housing (10); and
a plurality of secondary batteries accommodated in the housing (10),
wherein each of the secondary batteries comprises:
a case (100);
an electrode assembly (200) accommodated in the case (100) and comprising a negative electrode tab (301) and a positive electrode tab (302) that are bent in opposite directions;
a cap assembly (400) facing the electrode assembly (200) and comprising a first terminal (420) and a second terminal (430);
a first connection member (500) between the electrode assembly (200) and the cap assembly (400) and connected to the first terminal (420) and the negative electrode tab (301); and
a second connection member (600) between the electrode assembly (200) and the cap assembly (400) and connected to the second terminal (430) and the positive electrode tab (302).
